# EUROPEAN PATENT APPLICATION

(11) **EP 2 474 894 A1**
(43) Date of publication of application: **11.07.2012**
(21) Application number: 11150335.5
(22) Date of filing: 06.01.2011
(51) Int. Cl.: G06F 3/048, H04M 1/725

(54) **Electronic device and method of controlling same**

(71) Applicant: Research In Motion Limited, Waterloo, ON N2L 3W8 (CA)
(72) Inventor: Kumar, Surender, Rolling Meadows, IL 60008 (US); Jano, Bashar, Rolling Meadows, IL 60008 (US); Griffin, Jason Tyler, Waterloo, Ontario N2L 3L3 (CA); Lukasik, Susan Lucille, Rolling Meadows, IL 60008 (US)
(74) Representative: Roberts, Gwilym Vaughan

(57) **Abstract**

A method includes detecting a gesture associated with an edge of a display, determining an element associated with the edge, and opening the element.

## Description

### FIELD OF TECHNOLOGY

The present disclosure relates to electronic devices including, but not limited to, electronic devices having displays and their control.

### BACKGROUND

Electronic devices, including portable electronic devices, have gained widespread use and may provide a variety of functions including, for example, telephonic, electronic messaging and other personal information manager (PIM) application functions. Portable electronic devices include several types of devices including mobile stations such as simple cellular telephones, smart telephones (smart phones), Personal Digital Assistants (PDAs), tablet computers, and laptop computers, with wireless network communications or near-field communications connectivity such as Bluetooth® capabilities.

Portable electronic devices such as PDAs, or tablet computers are generally intended for handheld use and ease of portability. Smaller devices are generally desirable for portability. A touch-sensitive display, also known as a touchscreen display, is particularly useful on handheld devices, which are small and may have limited space for user input and output. The information displayed on the display may be modified depending on the functions and operations being performed. Improvements in electronic devices with displays are desirable.

### SUMMARY

A method includes detecting a gesture associated with an edge of a display, determining an element associated with the edge, and opening the element.

### BRIEF DESCRIPTION OF THE DRAWINGS

FIG. 1 is a block diagram of a portable electronic device in accordance with an example embodiment.

FIG. 2 is a front view of an example of a portable electronic device in accordance with the disclosure.

FIG. 3 is a flowchart illustrating a method of controlling the portable electronic device in accordance with the disclosure.

FIG. 4 through FIG. 7 illustrate examples of associations between gestures and information displayed on a display of an electronic device in accordance with the disclosure.

FIG. 8 through FIG. 12 illustrate examples of associations between gestures and information displayed on a display of another electronic device in accordance with the disclosure.

FIG. 13 through FIG. 16 illustrate examples of associations between gestures and information displayed on a display in accordance with the disclosure.

### DETAILED DESCRIPTION

The following describes an electronic device and a method that includes detecting a gesture associated with an edge of a display, and based on the attributes of the gesture, displaying information associated with a next element of a first group.

For simplicity and clarity of illustration, reference numerals may be repeated among the figures to indicate corresponding or analogous elements. Numerous details are set forth to provide an understanding of the embodiments described herein. The embodiments may be practiced without these details. In other instances, well-known methods, procedures, and components have not been described in detail to avoid obscuring the embodiments described. The description is not to be considered as limited to the scope of the embodiments described herein.

The disclosure generally relates to an electronic device, which is a portable or non-portable electronic device in the embodiments described herein. Examples of portable electronic devices include mobile, or handheld, wireless communication devices such as pagers, cellular phones, cellular smart-phones, wireless organizers, PDAs, wirelessly enabled notebook computers, tablet computers, and so forth. Examples of non portable electronic devices include electronic white boards, for example, on a wall, smart boards utilized for collaboration, built-in displays in furniture or appliances, and so forth. The portable electronic device may also be a portable electronic device without wireless communication capabilities, such as a handheld electronic game device, digital photograph album, digital camera, or other device.

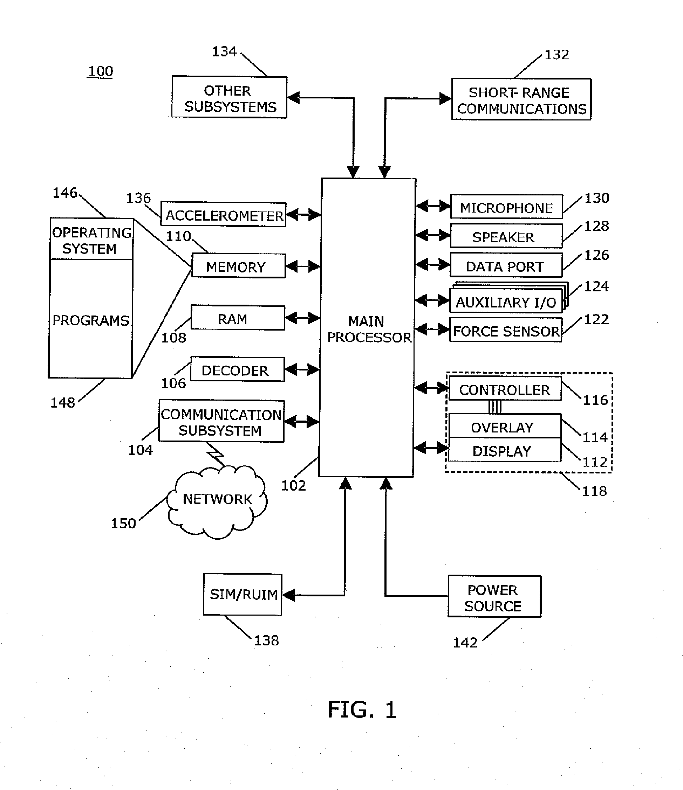

A block diagram of an example of an example of an electronic device 100 is shown in FIG. 1. The electronic device 100, which may be a portable electronic device, includes multiple components, such as a processor 102 that controls the overall operation of the electronic device 100. The electronic device 100 presently described optionally includes a communication subsystem 104 and a short-range communications 132 module to perform various communication functions, including data and voice communications. Data received by the electronic device 100 is decompressed and decrypted by a decoder 106. The communication subsystem 104 receives messages from and sends messages to a wireless network 150. The wireless network 150 may be any type of wireless network, including, but not limited to, data wireless networks, voice wireless networks, and networks that support both voice and data communications. A power source 142, such as one or more rechargeable batteries or a port to an external power supply, powers the electronic device 100.

The processor 102 interacts with other components, such as Random Access Memory (RAM) 108, memory 110, a display 112 with a touch-sensitive overlay 114 operably connected to an electronic controller 116 that together comprise a touch-sensitive display 118, one or more actuators 120, one or more force sensors 122, an auxiliary input/output (I/O) subsystem 124, a data port 126, a speaker 128, a microphone 130, short-range communications 132, and other device subsystems 134. User-interaction with a graphical user interface is performed through the touch-sensitive overlay 114. The processor 102 interacts with the touch-sensitive overlay 114 via the electronic controller 116. Information, such as text, characters, symbols, images, icons, and other items that may be displayed or rendered on an electronic device, is displayed on the touch-sensitive display 118 via the processor 102. The processor 102 may interact with an orientation sensor such as an accelerometer 136 to detect direction of gravitational forces or gravity-induced reaction forces, for example, to determine the orientation of the electronic device 100.

To identify a subscriber for network access, the electronic device 100 may optionally use a Subscriber Identity Module or a Removable User Identity Module (SIM/RUIM) card 138 for communication with a network, such as the wireless network 150. Alternatively, user identification information may be programmed into memory 110.

The electronic device 100 includes an operating system 146 and software programs or components 148 that are executed by the processor 102 and are typically stored in a persistent, updatable store such as the memory 110. Additional applications or programs may be loaded onto the electronic device 100 through the wireless network 150, the auxiliary I/O subsystem 124, the data port 126, the short-range communications subsystem 132, or any other suitable subsystem 134.

A received signal, such as a text message, an e-mail message, or web page download, is processed by the communication subsystem 104 and input to the processor 102. The processor 102 processes the received signal for output to the display 112 and/or to the auxiliary I/O subsystem 124. A subscriber may generate data items, for example e-mail messages, which may be transmitted over the wireless network 150 through the communication subsystem 104, for example.

The touch-sensitive display 118 may be any suitable touch-sensitive display, such as a capacitive, resistive, infrared, surface acoustic wave (SAW) touch-sensitive display, strain gauge, optical imaging, dispersive signal technology, acoustic pulse recognition, and so forth, as known in the art. A capacitive touch-sensitive display includes a capacitive touch-sensitive overlay 114. The overlay 114 may be an assembly of multiple layers in a stack which may include, for example, a substrate, a ground shield layer, a barrier layer, one or more capacitive touch sensor layers separated by a substrate or other barrier, and a cover. The capacitive touch sensor layers may be any suitable material, such as patterned indium tin oxide (ITO).

The display 112 of the touch-sensitive display 118 includes a display area in which information may be displayed, and a non-display area extending around the periphery of the display area. Information is not displayed in the non-display area, which is utilized to accommodate, for example, electronic traces or electrical connections, adhesives or other sealants, and/or protective coatings around the edges of the display area.

One or more touches, also known as touch contacts or touch events, may be detected by the touch-sensitive display 118. The processor 102 may determine attributes of the touch, including a location of a touch. Touch location data may include an area of contact or a single point of contact, such as a point at or near a center of the area of contact. A signal is provided to the controller 115 in response to detection of a touch. A touch may be detected from any suitable contact member, such as a finger, thumb, appendage, or other items, for example, a stylus, pen, or other pointer, depending on the nature of the touch-sensitive display 118. The controller 116 and/or the processor 102 may detect a touch by any suitable contact member on the touch-sensitive display 118. Multiple simultaneous touches may be detected.

One or more gestures may also be detected by the touch-sensitive display 118. A gesture, such as a swipe, also known as a flick, is a particular type of touch on a touch-sensitive display 118 and may begin at an origin point and continue to an end point. A gesture may be identified by attributes of the gesture, including the origin point, the end point, the distance travelled, the duration, the velocity, and the direction, for example. A gesture may be long or short in distance and/or duration. Two points of the gesture may be utilized to determine a direction of the gesture. A gesture may also include a hover. A hover may be a touch at a location that is generally unchanged over a period of time or is associated with the same selection item for a period of time.

An optional force sensor 122 or force sensors is disposed in any suitable location, for example, between the touch-sensitive display 118 and a back of the electronic device 100 to detect a force imparted by a touch on the touch-sensitive display 118. The force sensor 122 may be a force-sensitive resistor, strain gauge, piezoelectric or piezoresistive device, pressure sensor, or other suitable device. Force as utilized throughout the specification refers to force measurements, estimates, and/or calculations, such as pressure, deformation, stress, strain, force density, force-area relationships, thrust, torque, and other effects that include force or related quantities.

Force information related to a detected touch may be utilized to select information, such as information associated with a location of a touch. For example, a touch that does not meet a force threshold may highlight a selection option, whereas a touch that meets a force threshold may select or input that selection option. Selection options include, for example, displayed or virtual keys of a keyboard; selection boxes or windows, e.g., "cancel," "delete," or "unlock"; function buttons, such as play or stop on a music player; and so forth. Different magnitudes of force may be associated with different functions or input. For example, a lesser force may result in panning, and a higher force may result in zooming.

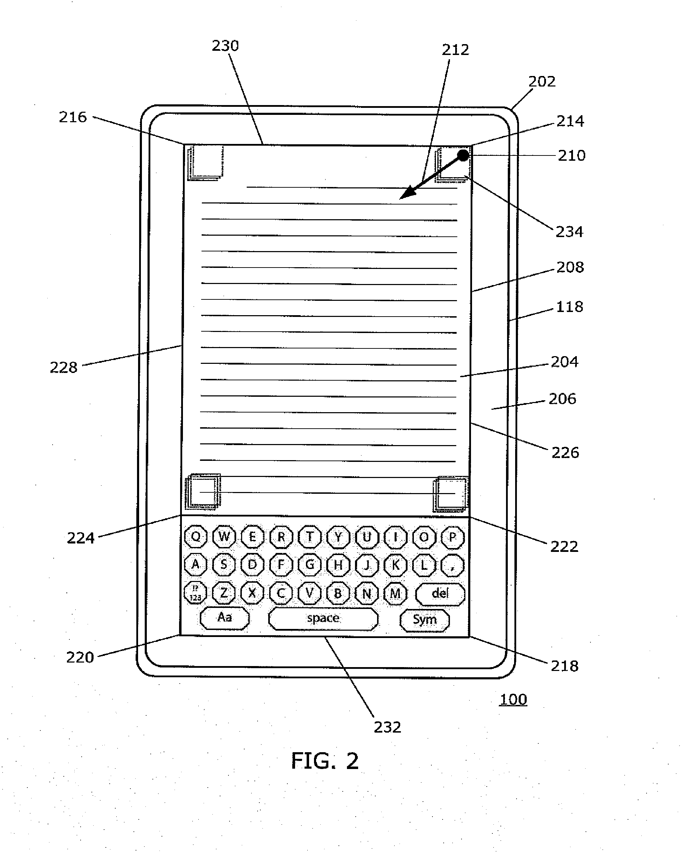

A front view of an example of the electronic device 100 is shown in FIG. 2. The electronic device 100 includes a housing 202 in which the touch-sensitive display 118 is disposed. The housing 202 and the touch-sensitive display 118 enclose components such as the components shown in FIG. 1. The display area 204 of the touch-sensitive display 118 may be generally centered in the housing 202. The non-display area 206 extends around the display area 204.

The touch-sensitive overlay 114 may extend to cover the display area 204 and the non-display area 206 such that a touch on either or both the display area 204 and the non-display area 206 may be detected. The density of touch sensors may differ between the display area 204 and the non-display area 206. For example, the density of nodes in a mutual capacitive touch-sensitive display, or density of locations at which electrodes of one layer cross over electrodes of another layer, may differ between the display area 204 and the non-display area 206.

A touch that is associated with an edge of the touch-sensitive display 118 is identified by attributes of the touch. The touch may be located at a point or area on the touch-sensitive display. A touch may be associated with an edge of the touch-sensitive display 118, e.g., when the touch is at or near an edge or boundary 208 between the display area 204 and the non-display area 206. For example, a touch that is within a threshold distance of the boundary 208 may be associated with the edge. Alternatively, or in addition, a touch may be associated with an edge of the touch-sensitive display 118 when the touch location is associated with the non-display area 206.

The touch may be a gesture that is associated with an edge. A gesture may be associated with an edge of the touch-sensitive display 118 when the origin point of the gesture is on the display area 204 and is at or near the boundary 208 between the display area 204 and the non-display area 206. A touch at the origin 210 that follows the path illustrated by the arrow 212 may be associated with an edge. Alternatively, or in addition, a gesture may be associated with an edge of the touch-sensitive display 118 when the gesture begins near or on the non-display area 206 and continues into the display area 204. Optionally, a gesture may be associated with an edge of the touch-sensitive display 118 when the gesture has an origin point and a gesture path that are both within the non-display area 206. Alternatively, a gesture's end point associated with an edge may be utilized.

Touches that are associated with an edge may also include multiple touches and/or multi-touch gestures in which touches are simultaneous, i.e., overlap at least partially in time, and at least one of the touches is at or near an edge.

The edge of the touch-sensitive display 118, which may be an edge of the display area 204, may be associated with an element, which may include applications, tools, and/or documents. Applications include software applications, for example, email, calendar, web browser, and any of the myriad of software applications that exist for electronic devices. Tools may include, for example, keyboards, recording technology, and so forth. Documents may include pictures or images, emails, application documents such as text documents or spreadsheets, webpages, and so forth. For example, each edge of the display area 204 may be associated with a different group of elements. A group may include one or more elements, or a combination thereof. Groups of elements may be associated with any location along the edge of the touch-sensitive display 118. Edges include, for example, one or more of the corners 214, 216, 218, 220 of the touch-sensitive display 118, corners 222, 224 of displayed information, borders between displayed information, such as between a keyboard, text, or other separated displayed information, the sides 226, 228, 230, 232 of the display area 204, along borders between displayed information, and/or at other locations along the sides 226, 228, 230, 232. Edges may be associated with the display area 204 and/or the non-display area 206.

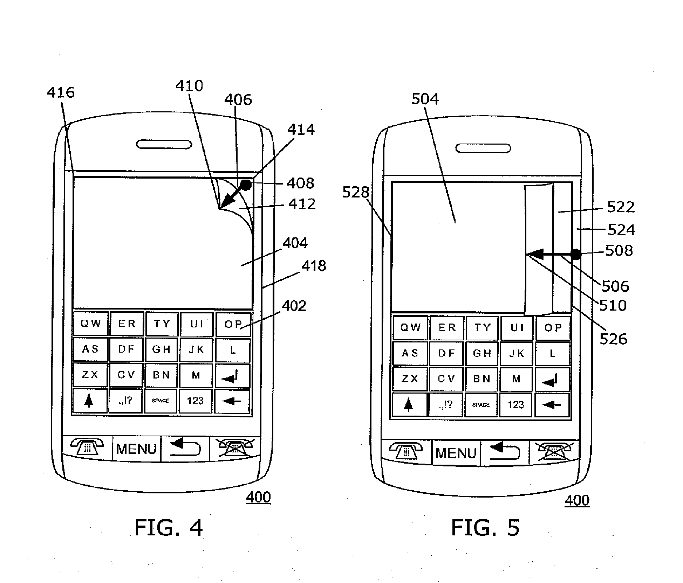

In the example illustrated in FIG. 2, four groups of elements are associated with edges of the display area 204. Optionally, the groups may be illustrated by displaying stacked icons 234 at or near the corners 214, 216, 222, 224. In the example illustrated in FIG. 2, the stacked icons 234 are illustrated as ghosted or semitransparent images such that information under the stacked icons 234 is visible. Alternatively, the groups may by associated with edges, but information representing the group such as an icon, may not be displayed, as illustrated in FIG. 4 through FIG. 6. Groups of elements may include, for example, groups of applications, tools or documents that have been opened and are running on the electronic device 100, elements that are grouped by a user, elements that are grouped by frequency of use, time of last use, context, application, and/or any other suitable grouping. An element may be opened, for example, when an application is launched, a tool is displayed for use or is engaged, a media file is played, an image is displayed, and so forth.

The groups of elements may each be separate groups or groups of the elements may be interrelated. For example, the group associated with the edges at the upper right corner 216 may include succeeding elements of a group and the group associated with the edges at the upper left corner 214 may include preceding elements of a group.

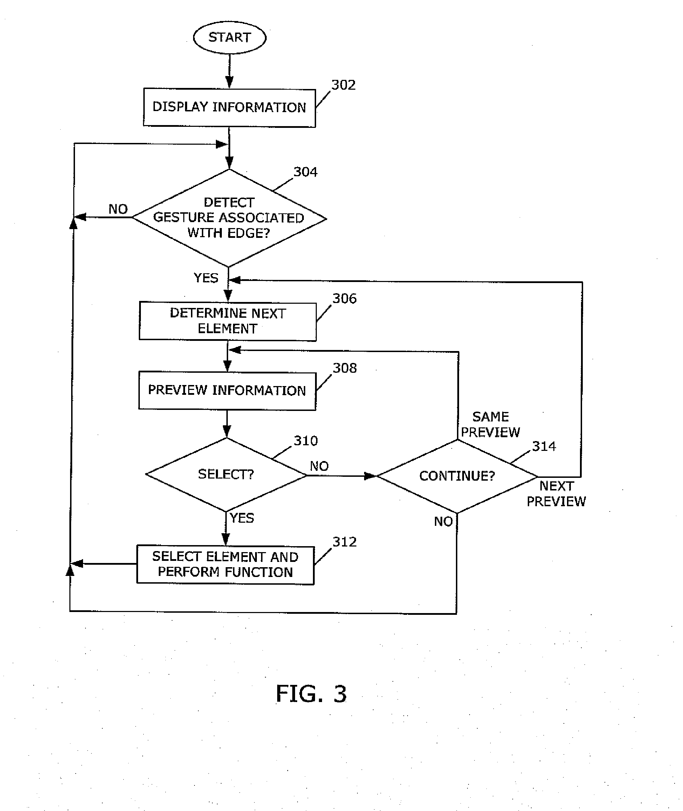

A flowchart illustrating a method of controlling an electronic device, such as the electronic device 100, is shown in FIG. 3. The method may be carried out by computer-readable code executed, for example, by the processor 102. Coding of software for carrying out such a method is within the scope of a person of ordinary skill in the art given the present description. The method may contain additional or fewer processes than shown and/or described, and may be performed in a different order. The method may be applied to a single continuous gesture to change the preview of elements in a group or multiple consecutive gestures to change the preview of elements in the group.

Information is displayed 302 on the touch-sensitive display 118. The information may be information associated with a home screen, or any suitable application, such as email, text messaging, calendar, tasks, address book, Webpage, word processing, media, or any other suitable application in which information is displayed. Information associated with email may include a list of email messages, information associated with a calendar may include a calendar day view, week view, month view, or agenda view, information associated with an address book may include a listing of contacts, information associated with a word processing application may include a document, information associated with media may include picture, videos, or artwork related to music. The information is not limited to the examples provided.

When a gesture that is associated with an edge of the touch-sensitive display 118 is detected 304, the next element in a group that is associated with the gesture is determined 306 and a preview of information associated with the next element is displayed 308. The gesture may be, for example, a swipe, which may include a multi-direction swipe or repetitive swipe, hover, grab, drag, double tap, or any combination thereof. Such gestures may also be combined with actuation of physical keys. The next element in the group may be a first element in the group, for example, when an element was not displayed prior to receipt of the gesture, a succeeding element in the group, or a preceding element in the group. The speed of the gesture or duration of the gesture in distance or in time may be utilized to skip elements in the ordered group for faster navigation.

The preview may be, for example, an icon representative of the element, a partial view of information stored in association with the element, a word or words identifying the element, or a partial view of the element. The information may be retrieved from data records stored on the electronic device 100. For example, email messages, may be stored as data records, in memory 110 and data from these email messages may be retrieved. Many different previews are possible for each element. For example, a preview of an email application may include information from the last three email messages received. Information from a predetermined number of fields stored in the email messages may be included in the preview. A preview of a calendar application may include information from calendar records stored on the electronic device 100 for calendar events occurring, e.g., within the next 24 hours. A preview of an address book application may include information from the most recent contact viewed in the address book application. A preview of the web browser application may include a list of bookmarked websites or the most-recent websites browsed. A preview of the media player application may include fields from the two songs played most frequently or the three most-recent songs played. A preview of the phone application may include a list of the most frequently dialed phone numbers or a list of recently missed calls. Previews for the email application, calendar application, address book application, web browser application, media player application, and phone application are not limited to the examples provided. Previews of documents may include an image of the document, a portion of the document, or fields from the document. The type of information displayed in the preview may be selected or may be set on the electronic device 100. For example, the information previewed or the type of preview may be preset on the electronic device. For example, the number of emails and information associated with each email, such as the subject and sender, included in the preview may be preset on the electronic device. Optionally, a user may select the information previewed or the type of preview. The selection may be stored, for example, in a preview options profile.

The information previewed may optionally be expanded for a displayed element. For example, if a preview normally includes 3 emails or 3 contacts, and expanded preview may include 5 or more emails or contacts. An expanded preview for an image file may be two or three times the size of a normal preview. Expanded previews may be provided by settings in a user profile. For example, a user may be able to select the number of emails or contacts or the size of previewed information in an expanded preview. Optionally, expanded previews may be provided upon detection of an associated gesture, such as a gesture that is a secondary touch or comprises multiple simultaneous touches, which gesture indicates input to provide an expanded preview. An expanded preview may be temporary, such as for the duration of a gesture or for a predetermined period of time, or may be selected as an option for all previews. Expanded previews provide the user with more information to facilitate a decision whether or not to open the element being previewed, without opening the element.

When a selection is detected 310, the process continues at 312 where display of the preview is discontinued and a function associated with the selected element is performed. The element may be selected at 310 by, for example, selection utilizing a convenience key on the touch-sensitive display 118 or depressing a key or button of the portable electronic device 100. Alternatively, the element may be selected by a change in direction of the gesture, an end of the gesture, by a further touch or gesture, and so forth.

When a selection is not detected 310, the process continues at 314. When the gesture ends at 314, display of the preview is discontinued and the process continues at 304. Display of the preview may be discontinued immediately upon detection of the end of the gesture or may be discontinued a short period of time after the end of the gesture. A suitable short period of time after which display of the preview is discontinued may be, for example, two seconds. Discontinuing display of the preview may be gradual, for example, the preview may fade from the display 112.

When the gesture continues and indicates a next element 314, the process continues at 306, where the next element is determined and information associated with the next element is previewed. When the gesture continues and indicates the same element 314, the process continues at 308 and the same information is previewed. The gesture may indicate a next element, for example, when the gesture continues in a same direction. The gesture may indicate the same element when movement of the gesture discontinues or slows, e.g., when the gesture becomes a hover.

Examples of associations of gestures and information displayed on an electronic device 100 are shown in FIG. 4 through FIG. 7. The terms above, upper, below, lower, right, and left are utilized to provide reference to the orientation of the electronic device in each figure and are not otherwise limiting.

In the example illustrated in FIG. 4, information 404 associated with an element is displayed on a touch-sensitive display 418 of an electronic device 400. In this example, the electronic device 400 is a portable electronic device and includes components similar to those described above with reference to FIG. 1. The electronic device 400 may include a virtual keyboard 402 displayed on the touch-sensitive display 418 and information 404 displayed above the keyboard 418. A gesture 406 that is associated with an edge and that begins at the origin point 408 is detected. The gesture is, for example, a swipe that ends at the point 410. The group associated with the gesture is determined, for example, by identifying the group associated with an edge closest to the gesture. The upper right corner 414 may be associated, for example, with a group of applications, and the next element in the group that is associated with the corner 414 is a succeeding application in the group.

A preview of information associated with the next element in the group associated with the corner 414 is displayed. The graphics displayed during the gesture may optionally appear as a peeling page in which the prior element is peeled off and the new element is revealed by the peeling to provide the preview of information. In the example illustrated in FIG. 4, the gesture is associated with the corner 414 and the information is displayed as a page with a corner 412 of the page peeling or bending away.

The next element in the group associated with the corner 414 is displayed as being located under the element page that is peeled off. Selection of an element may be input by detecting any suitable selection input such as, for example, double tapping on the preview of information or on the peeled portion of the previous page, multiple simultaneous touches, or utilizing a convenience key or physical button or other input device on the portable electronic device 400. When the element is selected, the information associated with the element may be displayed by launching or opening the element. Information displayed prior to detecting the gesture is no longer displayed. Optionally, the information displayed prior to detecting the gesture may be closed or exited. To display the information associated with the element, the page may appear to continue to peel. Peeling may be at a constant speed or at a speed that changes with time.

A further element in the group associated with the corner 414 is displayed when a further gesture, which may be similar to the gesture 406, is detected. The elements of the group associated with the corner 414 may be browsed through utilizing successive gestures to display a preview of information. For example, three gestures similar to the gesture 406, causes a preview of information associated with the third element in the group associated with the corner 414 to be displayed. A selection after detection of the third gesture causes the information associated with the third element to be displayed, e.g., by opening the third element.

Elements associated with previously displayed information may be added to the group associated with the corner 416, such that a gesture associated with the edges at the corner 416, followed by selection, launches or opens the element displayed prior to the gesture 406 and the information associated with the element displayed prior to the gesture 406 is returned to the display area. Thus, an ordered list of elements may be displayed in turn in an order, referred to herein as browsed through, also referred to as flipped, leafed through or progressed through, utilizing swipes that are associated with the edges at the corner 414. The ordered list of elements may be browsed backwards, or in the opposite direction in the list, utilizing gestures that are associated with the edges at the corner 416.

Optionally, the elements associated with the edges at the corner 414 may be independent of the elements associated with the edges at the corner 416, and when an element is selected, the previously displayed element is placed at the bottom of the list of elements associated with the corner 414.

In the example illustrated in FIG. 5, information 504 that may be associated with an element is displayed on the touch-sensitive display 418. A gesture 506 that begins at the origin point 508 and ends at the endpoint 510 is detected. The gesture crosses the boundary between the display area 522 and the non-display area 524 and is associated with the edge at the center of the side 526 because the gesture crosses the boundary. The next element in the associated group is determined by identifying the group associated with the edge located closest to the gesture 506, and a preview of information associated with the next element in the group that is associated with the center of the side 526 is displayed. When the next element is selected, for example, by double tapping on the preview of information, the previously displayed element is no longer displayed. During the gesture, the information displayed prior to detecting the gesture is displayed as a page that is peeled off by the gesture. In the example illustrated in FIG. 5, the gesture is associated with the side 526 and the information is displayed as a page with a side of the page peeling or bending away.

An ordered list of elements may be browsed through utilizing gestures that are associated with the edge at the center of the side 526. The ordered list of documents may be browsed through backwards, or in the opposite direction in the list, utilizing gestures that are associated with the edge at the opposite side 528. When the desired element is reached, the element may be selected. The elements in a group may be rotated through in a circular manner, e.g., continuously displaying elements in order without end. Alternatively, once each element of a group is previewed, no further elements are previewed.

Optionally, a multi-touch gesture that is associated with an edge may be utilized to progress through multiple elements in a group or skip elements in the group. Alternatively, faster gestures may be utilized to progress through multiple elements in a group or skip elements in the group. Alternatively, the speed of the gesture may be utilized to determine the next element by progressing through multiple elements or skipping elements when faster gestures are detected.

The elements associated with the edge of the side 526 may be independent of the elements associated with the edge of the side 528. When an element is peeled off by a swipe associated with one of the sides 526, 528, the element that is closed or exited may be placed the bottom of the list or stack of elements associated with the side, or the element may alternatively be placed in a fixed order associated with the edge.

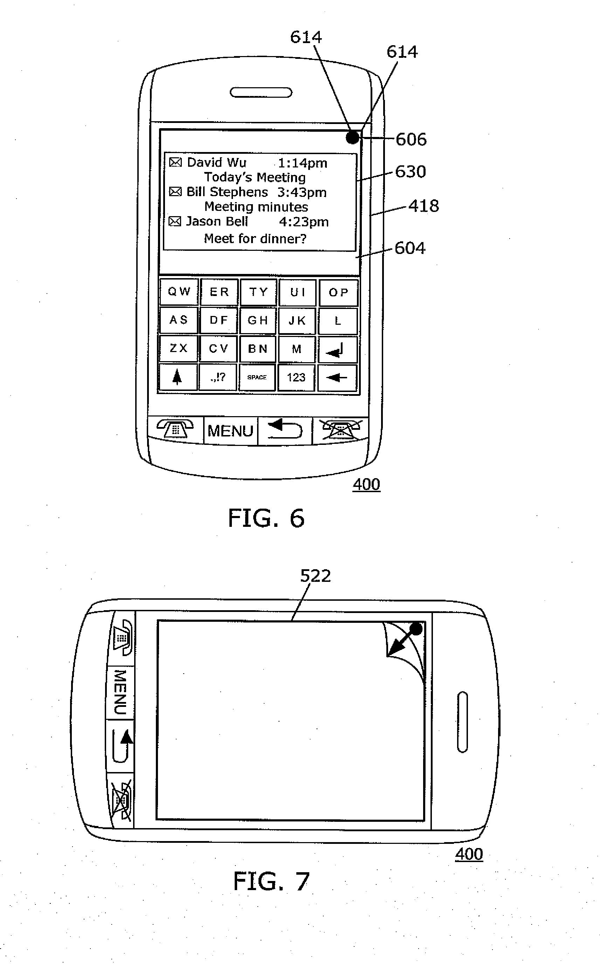

In the example illustrated in FIG. 6, information 604, which may be information associated with an element that is a home page, for example, is displayed. A gesture 606 is detected. The gesture 606 is a hover, the next element is identified, and the preview is displayed. The preview of information illustrated in FIG. 6 is associated with email and is displayed in a display box 630 over the information 604. The information displayed in the display box 630 includes, for example, information from the last three emails received at the electronic device 400. The display box 630 may be selected when a touch is detected at a location on the touch-sensitive display 418 that is associated with the display box 630 and the email application is launched.

Optionally, a hover that is maintained for a length of time that meets a threshold period of time may cause a further element in the group to be identified and information associated with the further element may be previewed. Thus, information associated with an element that is farther down in the ordered list may be previewed by maintaining the hover to identify the element as the next element.

Information may also be displayed in a landscape orientation as illustrated in FIG. 7, and groups of elements may be associated with edges 522 in the landscape orientation such that ordered groups of elements may be browsed through utilizing gestures that are associated with the edges of a display in the landscape orientation.

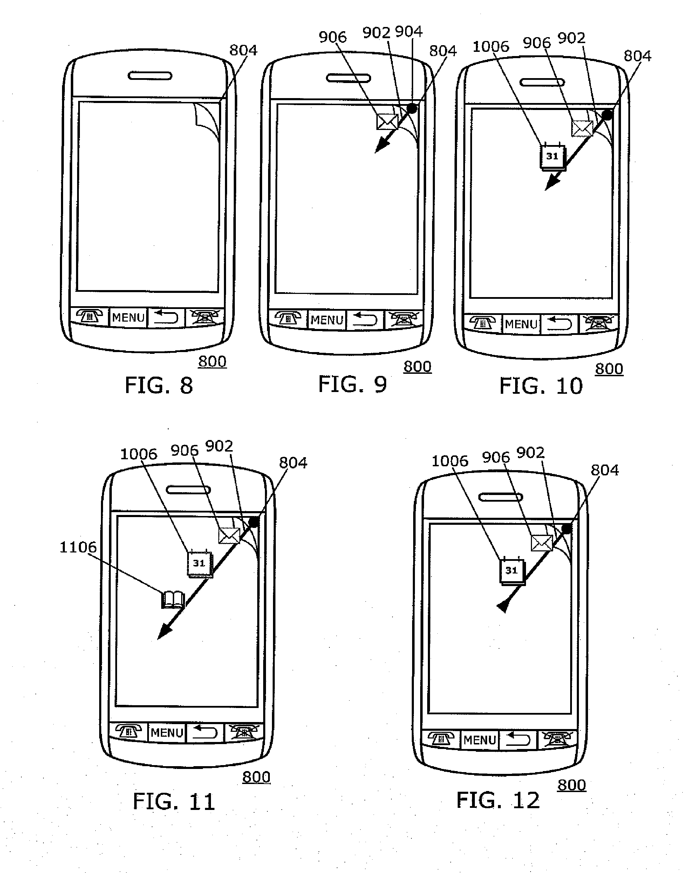

An example of associations of a gesture and information displayed on an electronic device 800 is illustrated in FIG. 8 through FIG. 12. In the example of FIG. 8 through FIG. 12, one group of elements that represent applications is illustrated, and a single continuous gesture associated with an edge that is a corner 804 is described throughout these figures. In the example illustrated in FIG. 8, information, such as information associated with an application or a home screen is displayed on the touch-sensitive display of an electronic device such as the portable electronic device 800. A group of elements is associated with the edge that is the corner 804 of the touch-sensitive display, as illustrated by the image associated with a peel at the corner 804. The image associated with the peel may optionally be displayed when a gesture is not detected to indicate that a group of elements is associated with the corner 804. A gesture 902 that is associated with an edge and that begins at the origin point 904 is detected, as illustrated in FIG. 9. The next element in the associated group is determined. To determine the next element in the group, the group is determined by identifying the group associated with the edge located closest to the gesture, which in the present example, is the group associated with the corner 804.

A preview, which may be an indicator of the next element in the group associated with the corner 804, is displayed in this example. The indicator, such as an icon or a word(s) associated with or identifying the next element is displayed. In the example of FIG. 9, an icon 906 is displayed. The icon 906 is associated with an email application.

The gesture 902 continues as illustrated in FIG. 10, and the next element in the associated group is determined. An icon 1006 is displayed. The icon 1006 in the example of FIG. 10 is associated with a calendar application. In the example illustrated in FIG. 10, display of the icon 906 is continued. The icon 906 may be ghosted, or may be displayed in a lighter or alternative colour, for example, to indicate that the gesture is associated with a different element, i.e., that the gesture is not presently associated with the elements associated with the ghosted icon 906.

The gesture 902 continues as illustrated in FIG. 11 and the next element in the associated group is determined. An icon 1106 is displayed. The icon 1106 in the example of FIG. 11 is associated with a contacts application. The icons 906, 1006 are still displayed but are ghosted to indicate that the gesture is no longer associated with the applications represented by the ghosted icons 906, 1006. Ghosting of prior preview information facilitates selection of a desired element. For example, a long, quick gesture may display all of the elements of the group, and reversing the gesture until the desired element is selected is a quick way of element selection.

The gesture 902 continues as illustrated in FIG. 12. The direction of the gesture, however, has changed such that the gesture direction is opposite to the gesture direction illustrated in FIG. 9 though FIG. 11. In this example, the next element in the associated group is the previous element, i.e., the change in direction of the gesture results in reversing the order of flipping through the elements of the group. Display of the icon 1106 is discontinued, and the icon 1006 is no longer ghosted to indicate that gesture is associated with the element represented by the icon 1006.

The element may be selected by ending or releasing the gesture. Optionally, the preview information associated with the element is displayed when the gesture ends. Alternatively, an element may be selected by changing the direction of the gesture to a direction other than the direction opposite the original direction, or reverse direction. When the gesture direction is reversed and the gesture ends at the origin point, a selection is not made.

A multi-touch gesture, or the speed of the gesture or duration of the gesture in distance or in time, may be utilized to skip elements in the ordered group for faster navigation.

Optionally, when a group includes too many elements to conveniently display a preview and facilitate selection utilizing a single gesture along the touch-sensitive display, the gesture may be discontinued when the gesture reaches an edge of the touch-sensitive display and a further gesture may be utilized to continue browsing through the group. In this example, an element is not selected when the gesture is discontinued at or near the edge of the touch-sensitive display and information associated with further elements of the group is displayed utilizing the further gesture.

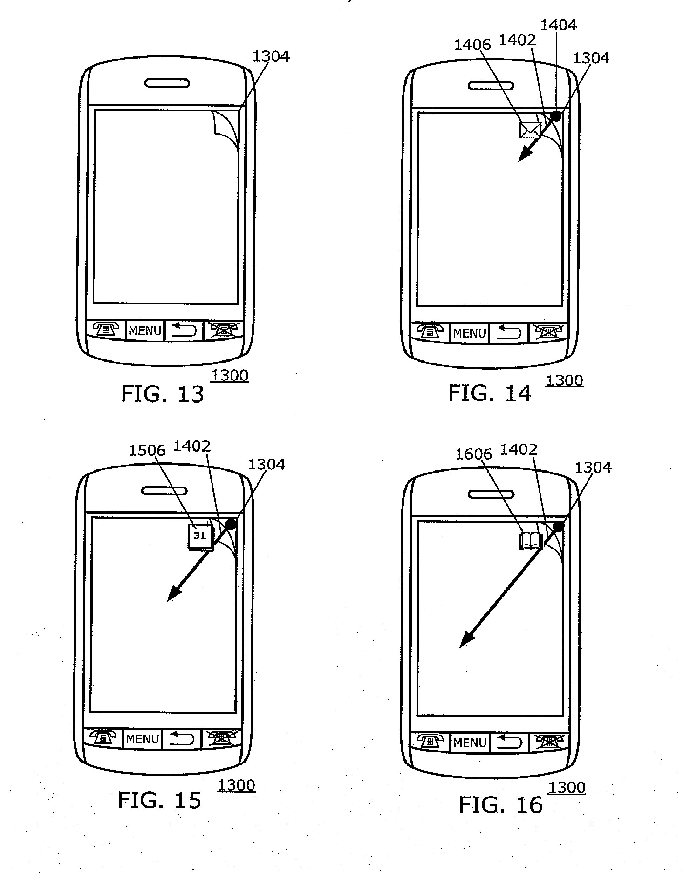

Another example of associations of a gesture and information displayed on an electronic device 1300 is illustrated in FIG. 13 through FIG. 16. In the example illustrated in FIG. 13, information, such as information associated with an application or a home screen is displayed on the touch-sensitive display 118 of an electronic device such as the portable electronic device 1300. A group of elements is associated with the edges at the corner 1304 of the touch-sensitive display, as illustrated by the image associated with a peel. The image associated with the peel may be displayed when a gesture is not detected to indicate that a group of elements is associated with the corner 1304. A gesture 1402 that is associated with an edge and that begins at the origin point 1404 is detected, as illustrated in FIG. 14. The next element in the associated group is determined.

A preview, which in the example of FIG. 14 is an icon 1406, is displayed. The icon 1406 is associated with an email application.

The gesture 1402 continues as illustrated in FIG. 15, and the next element in the associated group is determined. Display of the icon 1406 is discontinued and the icon 1506 associated with a calendar application is displayed.

The gesture 1402 continues as illustrated in FIG. 16, and the next element in the associated group is determined. Display of the icon 1506 is discontinued and an icon 1606 associated with the contacts application is displayed.

The direction of the gesture may be reversed to display a previously displayed icon. An element is selected by ending the gesture when the associated icon is displayed. The gesture direction may be reversed to return to a previously displayed icon for selection of the associated element. When the gesture direction is reversed and the gesture ends at the origin point, a selection is not made.

Optionally, a multi-touch gesture, or the speed of the gesture or duration of the gesture in distance or in time may be utilized to skip elements in the ordered group for faster navigation.

The icons displayed may optionally follow the location of the touch such that the icon location moves with movement of the finger.

Although a touch-sensitive display is described in the above examples as the input device for gestures, other navigation devices, such as optical joysticks, optical trackpads, trackballs, and so forth may be utilized.

Grouping of elements and associating the groups with edges or sides of the touch-sensitive display facilitates the display of information associated with different elements. The identification of gestures and association of gestures with a side or edge facilitates selection of displayed information by browsing through elements in a group. An element may be accessed without displaying a separate home page, icon page or menu list, facilitating switching between elements on the electronic device without taking up valuable display area. Elements such as applications, tools, or documents may be conveniently and efficiently browsed through, which may reduce time for searching and selection and may reduce power utilized during searching and selection.

A method includes detecting a gesture associated with an edge of a display, and based on the attributes of the gesture, displaying information associated with a next element of a first group.

The gesture may be associated with an edge of the display based on an origin point of the gesture or when the gesture crosses a boundary of the touch-sensitive display. The gesture may be associated with the edge when the origin point of the gesture is near an edge of a display. The next element may be one of a preceding element or a succeeding element of the first group. The next element may be a succeeding element of the first group when the gesture is associated with a first corner of the touch-sensitive display and the next element may be a preceding element of the first group when the gesture is associated with a second corner of the touch-sensitive display. Displaying information associated with the next element of the first group may include discontinuing displaying information associated with another element of the first group. Displaying information associated with the next element of the first group may include displaying a preview of the information associated with the next element. The preview may be an icon representative of the element, a partial view of information stored in association with the element, or a word identifying the element. The method may also include detecting a gesture associated with another edge of the display and, based on attributes of the gesture, displaying information associated with a next element of a second group. The next element in the group may be determined based on gesture attributes.

An electronic device includes a touch-sensitive display, memory, and a processor coupled to the touch-sensitive display and the memory to detect a gesture associated with an edge of a display, and based on the attributes of the gesture, display information associated with a next element of a first group.

The touch-sensitive display may include a display and at least one touch-sensitive input device that is disposed on a display area and a non-display area of the display. The attributes of the gesture may include an origin point and at least one of a direction, a speed, a duration, and a length of the gesture. Display of information associated with another element of the first group may be discontinued when information associated with the next element of the first group is displayed. The information associated with a next element of the first group may be a preview of information.

A method includes detecting a gesture associated with an edge of a display, determining an element associated with the edge, and opening the element.

The edge may be one of a corner of the touch-sensitive display and a side of the touch-sensitive display. The display may include a touch-sensitive display. The touch-sensitive display may include a display area where information is displayed and a non-display area where no information is displayed. The edge may be one of a corner of the display area and a side of the display area. The edge may be one of a corner of the non-display area and a side of the non-display area. The edge may be associated with a plurality of elements. Determining an element may include identifying a first element of the plurality of elements. The method may also include detecting that the gesture is sustained, displaying information associated with a plurality of elements associated with the edge, wherein the information is displayed for one of the plurality of elements at a time, and wherein determining the element comprises identifying the element for which information is displayed when the sustained gesture ends. The information may be displayed in turn in an order for at least some of the plurality of elements. The information may be displayed upon detection of the gesture. The gesture may have an origin or an endpoint associated with the edge. The gesture may touch the edge. The display may include a display area where information is displayed and a non-display area where no information is displayed, and at least a part of a touch sensor is disposed in the non-display area. An image associated with a peel may be displayed at the edge while the gesture is not detected. The method may also include detecting a second gesture associated with the edge and closing the first element.

A method includes detecting a gesture associated with a first edge of a touch-sensitive display, wherein the first edge is associated with a first plurality of elements, displaying information associated with the first plurality of elements, wherein the information is displayed for one of the plurality of elements at a time, when the gesture ends at a time, identifying a first element of the first plurality of elements for which first element information is displayed at the time.

The first element may be opened. The first element may be closed when the first element is open at the time of detecting. A second edge of the touch-sensitive display may be associated with a second plurality of elements

The present disclosure may be embodied in other specific forms without departing from its spirit or essential characteristics. The described embodiments are to be considered in all respects only as illustrative and not restrictive. The scope of the present disclosure is, therefore, indicated by the appended claims rather than by the foregoing description. All changes that come within the meaning and range of equivalency of the claims are to be embraced within their scope.

## Claims

1. A method comprising:
detecting a gesture associated with an edge of a display;
determining an element associated with the edge;
opening the element.

2. The method of claim 1, wherein the edge is one of a corner of the touch-sensitive display and a side of the touch-sensitive display.

3. The method of claim 1, wherein the display comprises a touch-sensitive display.

4. The method of claim 3, wherein the touch-sensitive display comprises a display area where information is displayed and a non-display area where no information is displayed.

5. The method of claim 4, wherein the edge is one of a corner and a side of one of the display area and the non-display area.

6. The method of claim 1, further comprising:
detecting that the gesture is sustained;
displaying information associated with a plurality of elements associated with the edge;
wherein the information is displayed for one of the plurality of elements at a time;
wherein determining the element comprises identifying the element for which information is displayed when the sustained gesture ends.

7. The method of claim 6, wherein the information is displayed in turn in an order for at least some of the plurality of elements.

8. The method of claim 6, wherein the information is displayed upon detection of the gesture.

9. The method of claim 1, wherein the gesture has an origin or an endpoint associated with the edge.

10. The method of claim 1, wherein the gesture at least touches the edge.

11. The method of claim 1, wherein the display comprises a display area where information is displayed and a non-display area where no information is displayed, and at least a part of a touch sensor is disposed in the non-display area.

12. The method of claim 1, further comprising an image associated with a peel at the edge while the gesture is not detected.

13. The method of claim 1, further comprising detecting a second gesture associated with the edge and closing the first element.

14. A computer-readable medium having computer-readable code executable by at least one processor of the electronic device to perform the method of claim 1.

15. An electronic device comprising:
a display;
a processor coupled to the touch-sensitive display and configured to detect a gesture associated with an edge of a display, determine an element associated with the edge, and open the element.

## Amended claims

### Amended claims in accordance with Rule 137(2) EPC.

**1.** A method comprising:
detecting a gesture on a display (112);
when the gesture is associated with a first edge of the display (112), identifying a first group of elements associated with the first edge, displaying information associated with a first element of the first group of elements, and displaying information associated with a second element of the first group of elements when the gesture is sustained;
when the gesture is associated with a second edge of the display (112), identifying a second group of elements associated with the second edge, displaying information associated with a first element of the second group of elements, and displaying information associated with a second element of the second group of elements when the gesture is sustained.

**2.** The method of claim 1, wherein the first edge is one of a first corner of the display (112) and a first side of the display (112), and wherein the second edge is one of a second corner of the display (112) and a second side of the display (112).

**3.** The method of claim 1, wherein the display (112) comprises a touch-sensitive display (118).

**4.** The method of claim 3, wherein the touch-sensitive display (118) comprises a display area (204) where information is displayed and a non-display area (206) where no information is displayed.

**5.** The method of claim 4, wherein the first edge is one of a first corner and a first side of one of the display area (204) and the non-display area (206), and wherein the second edge is one of a second corner and second side of the one of the display area (204) and the non-display area (206).

**6.** The method of claim 1,
wherein, when the gesture is associated with a first edge of the display (112), the information is displayed for one of the first group of elements at a time, and identifying the first group of elements comprises identifying one of the first group of elements for which information is displayed when the sustained gesture ends;
wherein, when the gesture is associated with the second edge of the display (112), the information is displayed for one of the second group of elements at a time, and identifying an element of the second group of elements for which information is displayed when the sustained gesture ends.

**7.** The method of claim 6, wherein the information is displayed in turn in an order for at least some of the first group of elements or the second group of elements.

**8.** The method of claim 6, wherein the information is displayed upon detection of the gesture.

**9.** The method of claim 1, wherein the gesture has an origin or an endpoint associated with the first edge when the gesture is associated with the first edge and the gesture has an origin or an endpoint associated with the second edge when the gesture is associated with the second edge.

**10.** The method of claim 1, wherein the gesture at least touches the first edge when the gesture is associated with the first edge and the gesture at least touches the second edge when the gesture is associated with the second edge.

**11.** The method of claim 1, wherein the display (112) comprises a display area (204) where information is displayed and a non-display area (206) where no information is displayed, and at least a part of a touch sensor (114) is disposed in the non-display area.

**12.** The method of claim 1, further comprising an image associated with a peel at one of the first edge and the second edge while the gesture is not detected.

**13.** The method of claim 1, further comprising opening one of the first group of elements or one of the second group of elements displayed when the gesture ends.

**14.** A computer-readable medium having computer-readable code executable by at least one processor (102) of the electronic device (100) to perform the method of any one of claims 1 to 13.

**15.** An electronic device (100) comprising:
a display (112);
a processor (102) coupled to the display (112) and configured to:
detect a gesture on the display (112);
when the gesture is associated with a first edge of the display (112),identify a first group of elements associated with the first edge, display information associated with a first element of the first group of elements, and display a second element of the first group of elements when the gesture is sustained;
when the gesture is associated with a second edge of the display (112), determine a second group of elements associated with the second edge, display information associated with a first element of the second group of elements, and display a second element of the second group of elements when the gesture is sustained.
